# EUROPEAN PATENT APPLICATION

(11) **EP 4 393 696 A1**
(43) Date of publication of application: **03.07.2024**
(21) Application number: 23212624.3
(22) Date of filing: 28.11.2023
(51) Int. Cl.: B32B 7/09, H01M 50/256, H01M 50/231, H01M 50/383, A62C 3/08, H01M 50/238, H01M 50/249, H01M 50/375, A45C 3/00, H01M 10/0525

(54) **FIRE AND EXPLOSION RESISTANT SAFETY BAG WITH A LOADED VENT FOR SAFE STORAGE AND TRANSPORT OF E-BIKE LITHIUM-ION BATTERIES**

(30) Priority: 30.11.2022 US 202218072499
(71) Applicant: Forfyre B.V., 3072 ZW Rotterdam (NL)
(72) Inventor: FORTUIN, Martinus Willem, Strijen (NL)
(74) Representative: Leeger, Ferdinand Christiaan

(57) **Abstract**

A fire resistant safety bag comprising a body that defines an internal volume for carrying and storing a lithium ion battery having a maximum energy capacity between 250-1250 Wh, such as 750 Wh, wherein the body of the bag is formed of multiple layers of fire resistant material designed for resisting the thermal energy contained in a 50% charged 750 Wh Lithium-ion battery, and wherein the layers of fire resistant material are jointly flexible for allowing one end of the bag to be folded between an open and a closed position for reversibly closing off the internal volume against manual access, wherein the bag comprises a high temperature first vent suitable for venting gasses from the inner volume to the environment, said first vent being loaded with a fire resistant material forming a filter.

## Description

### BACKGROUND OF THE INVENTION

### Field of the Invention

The invention relates to a fire and explosion resistant storage and transport bag for e-bike type lithium-ion batteries.

### Background Art

Presently, envelopes and other types of bag designs exist for containing small, low-capacity lithium batteries, such as phone batteries. For aviation these bags provide safety for all portable electronic devices with a maximum energy capacity of approximately 100 Wh, which covers most laptops, tablets and other electronic wearables. These bags are usually only retrieved so as to dispose of a phone or laptop that happened to spontaneously combust among the passenger's mid-flight. The aviation grade fire containment bags are particularly unsuited to containing larger high-capacity lithium batteries, such as e-bike batteries, given the fact that thermal runaway in these larger batteries causes a more rapid pressure buildup leading to explosion of the bag and resulting in the subsequent dispersal of high temperature materials. This means that there are no current market measures for safely storing and carrying batteries such as the e-bike batteries which tend to have an energy capacity of 400-1100 Wh. One of the most commonly found maximum energy capacities for such batteries is 750 Wh.

At the moment electric bicycles are growing in popularity among green couriers, and the population at large in both Europe and the United States. Batteries are taken into a domicile or into work to be charged at an ordinary power outlet. The e-bike is also becoming increasingly popular with senior citizens. In the Netherlands in particular senior citizens enjoy a well-maintained bicycle infrastructure which now, with the rise of e-bikes, increasing serves to in improve the mobility of these senior citizens. This means that high-capacity batteries (400-1100 Wh) are often manually disconnected, transported, charged indoors, and reconnected to a bicycle. In this process batteries can accidentally be dropped which may cause damage to said battery which may at some point lead to thermal runaway. It is also frequent occurrence that a parked e-bike is accidentally toppled by a passerby. While such passerby's are usually kind enough to return the bike to its former position, the user is usually unaware that the bicycle battery has sustained in impact and might therefor be damaged. It was found that most accidents with e-bike batteries occur directly after cycling, when the user transitions from cycling to walking or when the battery is removed from said bike. In such instances we find that the battery is usually charged to 50% or less of its maximum capacity on account of its recent use. Accordingly, it is a purpose of this invention to provide a fire and explosion resistant containment bag, for storing and transporting an e-bike battery, that does not rupture or explode when the therein contained battery undergoes thermal runaway.

Discussion of any references herein is given for more complete background and is not to be construed as an admission that such publications are prior art for patentability determination purposes.

### BRIEF SUMMARY OF THE INVENTION

Embodiments of the present invention are directed to a fire and explosion resistant safety bag comprising a body that defines an internal volume suitable for carrying and storing a lithium ion battery having a maximum energy capacity between 400-1100 Wh, such as 750 Wh, wherein the body of the bag is formed of multiple layers of fire resistant and thermal insulation materials designed for resisting the thermal energy contained in a 50% charged 750 Wh Lithium-ion battery, and wherein the layers of fire resistant material are jointly flexible for allowing one end of the bag to be folded between an open and a closed position for reversibly closing off the internal volume against manual access, wherein the bag comprises a high temperature vent suitable for venting gasses from the inner volume to the environment, said vent being loaded with a fire resistant material forming a filter. This prevents the bag from inflating to the point of rupture, while simultaneously blocking flames from forming in the outgas of the vent. Steel wool with a melting temperature of at least 1,400°C can be considered such a fire-resistant material forming a filter as it prevents a variety of solid particles from passing therethrough. Optionally, the steel wool fiber is selected from a non-stainless-steel wool having a wire thickness of 0.05 - 0.15 mm. A benefit of such a steel wool is that the steel wool is allowed to react with venting products through oxidation. Beneficially, fairly aggressive materials may be at least partially captured by the steel wool through the oxidation thereof. This oxidation may itself be undesirable as this change the permeability during thermal runaway. Alternatively, the steel wool is a stainless-steel wool fiber having a wire thickness of 0.02 - 0.15 mm, such as 0.02-0.08. This enables a consistent filter performance.

The vent that is discussed herein above is a first vent. Optionally, a second vent is present designed as having the same features as the first vent. The first and second vent may be furnished to the same face of the body. This is beneficial in the event that the inflated body has a stable position wherein both vents can face upwardly. Alternatively, the first and second vent may be furnished on different faces of the body such that the physical integrity of each face is substantially equal, and no one side has, beneficially, a greater proclivity for rupturing under pressure.

That is to say, optionally, the bag may comprise a second high temperature vent, such as opposite the first vent on a different face of the body.

Hereinafter the first vent is simply referred to as 'the vent'. It is to be understood that wherever the term 'the vent' is mentioned, a first and second vent may be imagined to replace said term each having the same features as 'the vent' in said option.

In some embodiments the high temperature vent is made of stainless steel. Stainless steel 316 for example has a melting point above 1,300°C allowing high temperature gasses to vent therethrough without melting the vent, or components thereof, causing local bag rupture or clogging and explosion.

In yet another embodiment the fire-resistant material with which the vent is loaded is a stainless-steel wiring. This may be form a mesh. It prevents larger particles from being ejected from the bag, allowing only fine particulate such as smoke to escape the bag. It is also particularly suitable for blocking flames.

In a more specific design, the vent is provided with metal endcaps with through holes, for retaining the fire-resistant material loaded within the vent, and wherein the metal of the end caps is selected for having a melting point above 1,100°C. The fire-resistant material with which the vent is loaded is preferably, also separately from this example, a steel wool with a melting point of at least 1400°C. To this end the endcaps too can be formed of stainless steel, such as stainless steel 316. This allows an outgas to be vented as multiple jets which allows for a faster cooling of the outgas, and prevents objects near the vent from reaching an ignition temperature.

Preferably the body of the bag is stitched such that the bag comprises a stable orientation in an inflated condition, and wherein in said stable orientation the vent is directed upwardly. The body may be designed such that it is stable in 2 position, face down, or face up, wherein the upper face comprises the vent. In one example the bag may be stitched such that the lower face has a lower curvature along its width direction than the upper face. This provides an increased statistical likelihood that, upon dropping the bag, the bag will settle in the face up configuration. In yet another example the bag may be provided with an inner spacer so as to space the battery from the vent. This prevents clogging, but also shifts the center of mass of the bag towards the lower face. Thus, also allowing the bag to naturally settle in a position in which the vent is always venting upwardly. Both features may also be present simultaneously.

Optionally, a portion of the endcap at an outer part of the bag is convex such that the through holes face multiple different directions. While an outflow of gasses may yet rise as a single column, the initial dispersion allows air to be drawn in and mingle with the outflow so as to reduce its temperature. This prevents objects nearby from combusting.

In order to prevent the bag from ripping open along its sides the bag may be stitched with a yarn with a stainless core and Kevlar-wounding, wherein the stainless-steel core is selected for being thermally stable at least up to and including 1100°C.

The body of the bag may comprise the following layers: i) an inner textile layer being thermally stable at 1200°C; ii) an outer layer of a silicone coated glass fabric and an intermediate layer between the inner; and iii) an outer layer comprising a nanofiber-based fire insulation material with a melting point of at least 1200°C.

To prevent the bag from opening itself the bag may comprising a lock for reversibly locking the bag in the closed position. It is additionally remarked that the bag is provided with fire retardant Velcro strips on the inside of the bag body at the one end of the bag that is reversibly openable. Such strips are stitched to the body.

As further options it may be considered to provide the vent with an inner portion forming a labyrinth or maze. This allows for a pressure drop in the vented gasses, reducing the velocity of vented jets of gas.

Additionally, to the before mentioned said inner portion is loaded with beads comprising water, or a fire-retardant material. Passing high temperature gasses may evaporate the water to reduce the combustibility of the ejected gasses. Water furthermore has a high heat capacity and phase transition enthalpy, thereby decreasing the temperature of the emitted gas over the course of the thermal runaway until such time the beads are depleted.

In yet another option the body, or layers thereof are free of aluminum, especially aluminum foil. This allows thermal radiation, such as infrared light, to escape more readily from the bag.

Lastly it is noted that the body may be designed such that the fully inflated inner volume of the bag measures 2-10dm3. This particular volume allows initial smoke to be contained within the bag and allows the bag to remain a handleable size in the initial stages of the thermal runaway. This allows the bag to be moved and reoriented in these most critical moments.

### BRIEF DESCRIPTION OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:

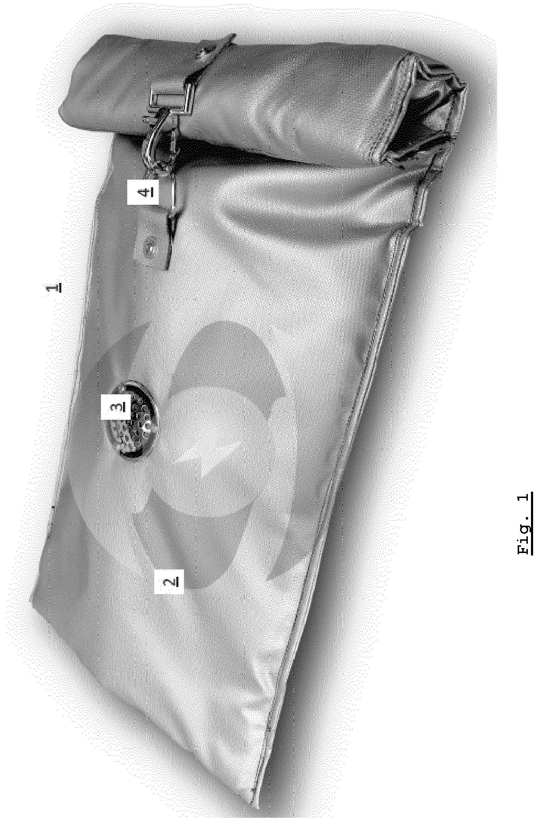

Figure 1 is an illustration from a perspective view showing a fire-resistant safety bag 1 according to an embodiment of the present invention.

### DETAILED DESCRIPTION OF THE INVENTION

Figure 1 shows a fire-resistant safety bag 1 according to an embodiment of the present invention. The bag comprises body 2 comprising a lower face and an upper face which are stitched together using High temperature yarn with stainless core, AISI 316 L, also known as stainless steel 316, and Kevlar-wounding Stainless core is stable up 1100 °C without load and up to 650°C under load. The bag defines an internal volume of 1-2 dm3 for carrying and storing a lithium-ion battery having a maximum energy capacity of 750 Wh. The body 2 of the bag is formed of multiple layers of fire-resistant material designed for resisting the thermal energy contained in a 50% charged 750 Wh Lithium-ion battery. The layers of fire-resistant material are jointly flexible for allowing one end of the bag to be folded between an open and a closed position for reversibly closing off the internal volume against manual access. In Figure 1 the bag is in a closed position. The bag 1 can be seen to sport a high temperature vent 3 that is suitable for venting gasses from the inner volume to the environment.

In this example the bag has the following dimensions 800 × 360 × 30 mm.

The bag is also provided with lock 4 for reversibly locking the bag in the closed position, open end of the bag is closed by use of Velcro strips which are stitched on the inside of the bag. This end of the bag should then be folded and locked by use of a metallic snap hook and D-ring, which are fixed to the bag mechanically with stainless steel rivets. As such, lock 4 comprises a metallic snap hook and D-ring. However, the person skilled in the art will understand that there are several other options available to him.

Vent 3 in more detail comprises stainless steel ventilation caps with a diameter of about 69 mm and a fire-resistant filter material incorporated therebetween. The filter relieves the large volume of highly flammable gas in a controlled manner. An additional benefit is that it filters out a large portion of the toxic particles.

It is noted that vent 3 extends in a through hole that has been provided to the body of the bag, which through hole itself extends through the layers of said body. The end caps have a diameter which is greater than the diameter of said through hole. In one example, the caps have a concave portion and a flange which extends in a radial direction from the vent. This allows the vent to remain anchored and resist being ejected from the flexible body. The before mentioned also prevents high temperature gasses from separating the multiple layers, or by escaping around the vent. In yet another example the end caps furnished on separate sides, namely an inner and outer side, of the bag body for cooperating with each other to hold the vent in place.

In one example, and separately combinable with any embodiment, the vent defines a chute which extends through the multiple layers of the body, wherein the endcaps are fastened to each other with a plurality of fasteners, such as screws or rivets, wherein the fasteners each extend through the multiple layers separately from the chute. Beneficially, this prevents material failure of the bag around the vent. The fasteners, such as the rivets are also made of a stainless steel. In a further example the caps have a concave portion and a flange which extends in a radial direction from the vent, wherein the fasteners connect with to the flanges of each of the endcaps.

In yet another example the vent is formed by two end caps which are fastened together, such as by fasteners, to define an internal volume. Within said internal volume the fire-resistant material forms the filter. Here, the endcaps each have a flange for securing it firmly to the body of the bag. The end caps are connected through a plurality of stainless-steel rivets which extend through the end caps and through the multiple layers of the body.

Alternatively, to the above example the two endcaps comprise a male and female connector portion respectively, such as screw connector portions, and wherein the two endcaps are fastened, such as screw fastened, by these connector portions such that the flanges of the two endcaps clamp a portion of the body therebetween. The before mentioned options may be combined with the vent comprising an inner portion forming a labyrinth or maze.

The body more precisely comprises the following layers:
**1. Inner layer**
   High temperature resistant textile
   Thermal stability: 1200 °C
   Flammability: Non-flammable A1 according to DIN 410 2
**2. Intermediate**
   Flexible, nanofiber based fire insulation material.
   Melting point: 1200 °C
   Thermal conduc.: 0,25 W/mK @ 1000 °C
   Flammability: Non-flammable A1 according to DIN 410 2
**3. Outer layer**
   E-Glass cloth, silicone coated for water resistance.
   Thickness: 0,5 mm
   Coating: 80 g/m²
   Temp resistance: 400 °C long term
   500 °C short term
   Flammability: Non-flammable according to DIN 66803 and DIN 4102 B2

Effective bodies were found for:
- the inner layer having a thickness of 0,5-0.9 mm;
- the outer layer having a thickness of 0,3-0,6 mm; and
- the intermediate layer having a thickness of 5-7 mm.

User preference optimized flexibility and fire resistance were found for:
- the inner layer having a thickness of 0,7 mm;
- the outer layer having a thickness of 0,45 mm; and
- the intermediate layer having a thickness of 6 mm.

The bag according to the invention, in particular the bag according the user preference, has been tested at Batteryuniversity GmbH in Am Sportplatz 30 63791 Karlstein am main, Germany. The relevant written accounts of said test and results thereof are herein provided:

### Test documentation

The goal of the bag is to greatly reduce the consequential damage from lithium-ion E-bike batteries. In order to do so the bag will need to provide a controlled environment in which the battery can ignite and burn in a controlled manner that is mimicking a real-life scenario as much as possible.

To register if the test is successful the following properties need to be tested:
- Whether the bag will allow gas and smoke to exit in a controlled manner - visual and analysis of camera images
- Whether the bag will keep the flames within the bag
   - visual and analysis of camera images
- Measure the maximum temperature of the bag exterior
   - to measure with infrared thermometer
- Whether the bag exterior (outer fabric, webbing, buckles) will remain intact - visual inspection after the test has been concluded.

To ignite a lithium-ion battery a resistive heater mat will be attached directly to one of the 21700 cells inside the batteries.

The heater mat will heat up one cell to force it into thermal runaway and finally ignition. Once the first cell ignites the power is shut off to prevent adding thermal energy to the process that might skew the outcome of the test. This causes a chain reaction in the rest of the batteries. This is considered a realistic and replicable scenario for series testing.

### Technical data

Designation of DUT 1-2 Manufacturer: fire protection bag for Lithium-Ion batteries LithiumSafe.

The bag is designed to store and charge E-bike lithium-ion batteries. In the event that a battery goes into thermal runaway while inside the bag, the bag will allow the battery to burn out in a controlled manner, containing the flames within the bag while allowing smoke and fumes to vent from the bag. The goal of the bag is to greatly reduce the consequential damages caused by LIB fires by containing the fire to the bag. The battery ignition will need to be as realistic as possible in order to simulate real life situations.

### Test equipment used

| Description | Type | Manufacturer | Inventory No. |
|---|---|---|---|
| E-bike battery test 1 | 750Wh, 37V, 20Ah | BMZ | - |
| Heater mat | 25×50mm, 12v, 1.25W | RS Components | RS Stock No: 245-499 |
| Power supply | | | |
| Temperature sensors | Type K | TC Direct | 401-302 |
| Data logger | Expert Key 200L | Delphin Technology | 00444 |
| Video camera | | | |
| Thermal camera | | Flir | |

### Procedure

One E-bike battery 750Wh consisting out of 40 pcs. 21700 Li-Ion cells is prepared with a resistive heater mat and a temperature sensor.

The resistive heater mat is directly attached to a 21700 cell. The electrical connections of the heater mat are fed through a small opening in the housing of the battery.

The temperature sensor is placed next to the heater mat on the cell.

Besides the heater mat and the temperature sensor inside and the wires of the heater mat and temperature sensor outside the battery, the battery is in original condition.

The battery gets charged to approximately 50% SOC.

Then the battery is put into the fire protection bag and two additional temperature sensors are placed on the outside of the bag.

During the test the bag including the battery is placed onto a tray filled with sand.

Power to the heater mat is gradually increased from 1.5W to 21W in order to maintain a continuous rise in temperature of the cell.

Temperature of cell and bag is monitored.

### Results

At the start of the test, power was applied to the heater mat and was gradually increased from 1.5 W to 21 W.

After about 1-hour thermal runaway was initiated.

Short after thermal runaway, the bag started venting smoke and fumes as intended. Venting continued irregularly for 15 minutes.

The bag was able to withstand the battery explosion.

The preceding examples can be repeated with similar success by substituting the generically or specifically described components and/or operating conditions of embodiments of the present invention for those used in the preceding examples.

Note that in the specification and claims, "about" or *"approximately"* means within twenty percent (20%) of the numerical amount cited.

Embodiments of the present invention can include every combination of features that are disclosed herein independently from each other. Although the invention has been described in detail with particular reference to the disclosed embodiments, other embodiments can achieve the same results. Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. A fire and explosion resistant safety bag comprising:
a body, such as free of aluminum, that defines an internal volume for carrying and storing a lithium-ion battery having a maximum energy capacity between about 250-1250 Wh,
wherein the body of the bag is formed of multiple layers comprising fire resistant inner layer and a thermal insulation layer designed for containing the thermal runaway of a 50% charged 750 Wh Lithium-ion battery, and wherein the multiple layers are jointly flexible for allowing one end of the bag to be folded between an open and a closed position for reversibly closing off the internal volume against manual access,
wherein the bag comprises a first high temperature vent extending through the multiple, jointly flexible, layers, suitable for venting gasses from the inner volume to the environment, said vent being loaded with a fire-resistant material forming a filter, and wherein optionally the body is designed such that the fully inflated inner volume of the bag is about 2-10dm³.

2. The bag according to claim 1, comprising a second high temperature vent, such as opposite the first vent.

3. The bag according to claim 1 or 2, wherein the body is stitched such that the bag comprises a stable orientation in an inflated condition, and wherein in said stable orientation the first vent is directed upwardly.

4. The bag according to anyone of claims 1-3, wherein the first high temperature vent is made of stainless steel.

5. The bag according to anyone of claims 1-4, wherein the fire-resistant material with which the first vent is loaded is a stainless-steel wiring.

6. The bag according to anyone of claims 1-5, wherein the first vent comprises two metal endcaps which are fastened to each other forming an internal space, and are each provided with through holes, wherein the fire-resistant material is loaded therebetween at least partially within the internal space, and wherein each of the metal of the end caps is selected for having a melting point above about 1,100°C.

7. The bag according to claim 6, wherein a portion of the endcap at an outer part of the bag is convex such that the through holes face multiple different directions.

8. The bag according to claim 6 or 7, wherein each of the two endcaps comprises a flange which extends in a radial direction from the first vent and wherein the endcaps are connected by their flanges through fasteners.

9. The bag according to claim 6, 7 or 8, wherein the two endcaps comprise a male and female connector portion respectively, and wherein the two endcaps are fastened by these connector portions such that the flanges of the two endcaps clamp a portion of the body therebetween for fixing the first vent to the bag body.

10. The bag according to anyone of claims 1-9, wherein the body of the bag is stitched with a yarn comprising a stainless core and Kevlar-wounding, wherein the stainless-steel core is selected for being thermally stable at least up to and including about 1100°C.

11. The bag according to anyone of claims 1-10, the body comprising:
- the inner layer, comprising a textile that is thermally stable at about 1200°C;
- an outer layer comprising a silicone coated glass fabric; and
- the thermal insulation layer provided as an intermediate layer between the inner and outer layer comprising a nanofiber-based fire insulation material with a melting point of at least about 1200°C.

12. The bag according to claim 11, wherein:
- the inner layer has a thickness of about 0,5-0.9 mm;
- the outer layer has a thickness of about 0,3-0,6 mm; and
- the intermediate layer has a thickness of about 5-7 mm.

13. The bag according to claim 12, wherein:
- the inner layer has a thickness of about 0,7 mm;
- the outer layer has a thickness of about 0,45 mm; and
- the intermediate layer has a thickness of about 6 mm.

14. The bag according to any one of claims 1-13, comprising a lock for reversibly locking the bag in the closed position.

15. The bag according to any one of claims 1-14, wherein the first vent comprises an inner portion forming a labyrinth or maze, wherein optionally said inner portion is loaded with beads comprising water, or a fire-retardant material.
